# EUROPÄISCHE PATENTSCHRIFT

(11) **EP 1 393 956 B1**
(45) Veröffentlichungstag und Bekanntmachung des Hinweises auf die Patenterteilung: **04.06.2008**
(21) Anmeldenummer: 03012358.2
(22) Anmeldetag: 30.05.2003
(51) Int. Cl.: B60K 17/16, B60K 17/22, B60K 17/348

(54) **Antriebsaggregat**
Power train
Ensemble de propulsion

(30) Priorität: 23.08.2002 DE 10238664
(43) Veröffentlichungstag der Anmeldung: 03.03.2004
(73) Patentinhaber: AUDI AG, 85045 Ingolstadt (DE)
(72) Erfinder: Märkl, Johann, 85128 Nassenfels (DE); Meixner, Christian, 85049 Ingolstadt (DE)

(56) Entgegenhaltungen:
- DE-A- 3 921 414
- DE-A- 19 515 686
- US-A- 4 258 587
- US-A- 5 205 373
- US-A- 5 632 354

## Beschreibung

Die Erfindung betrifft ein Antriebsaggregat, insbesondere für Kraftfahrzeuge.

Ein gattungsgemäßes Antriebsaggregat für Kraftfahrzeuge zeigt die EP 0 183 051 A1, bei dem das im Kraftfluss hinter dem Geschwindigkeits-Wechselgetriebe liegende Achsdifferenzial seitlich neben der Antriebsquelle bzw. der Brennkraftmaschine positioniert ist. Dazu ist die Ausgangswelle des Wechselgetriebes über einen Stirnradtrieb mit einem drehbar gelagerten Zwischenzahnrad trieblich mit einem Eingangszahnrad der Differenzial-Antriebswelle verbunden.

Diese bekannte technische Lösung führt zu einer motorseitigen Anordnung des Vorderachsdifferenzials. Bei dem bekannten Lösungsweg entsteht jedoch ein deutlich konstruktiver Aufwand.

Weitere bekannte Schaltgetriebe haben die Differenzialwelle des Vorderachsdifferenzials deutlich getriebeseitiger angeordnet, damit jedoch relativ motorfern angeordnet. Das erzeugt ein nicht optimales Bauvolumen der Motor-Getriebe-Baugruppe. Es kommt zu einem unerwünschten Vorderachsüberhang der Motor-Getriebe-Baugruppe.

Aus der DE 195 15 686 A1 ist bereits ein Antriebsaggregat für Kraftfahrzeuge mit einer Antriebsquelle, einem nachgeschalteten Geschwindigkeits-Wechselgetriebe und einem Achsdifferenzial bekannt, wobei das Achsdifferenzial über einen der Antriebsquelle benachbarten Zwischentrieb seitlich versetzt zur Ausgangswelle des Wechselgetriebes angeordnet ist. Der Zwischentrieb ist durch eine Zwischenwelle gebildet, die zwei Zahnräder trägt, von denen eines mit der Ausgangswelle des Wechselgetriebes und das andere mit dem am Ausgleichsgehäuse des Differenziales angeordnetem Antriebsrad in Eingriff ist.

Aufgabe der Erfindung ist es, ein Antriebsaggregat der gattungsgemäßen Art vorzuschlagen, das baulich einfacher, kompakter und hinsichtlich des Wirkungsgrades günstiger ist.

Diese Aufgabe wird mit den Merkmalen des Patentanspruches 1 gelöst. Vorteilhafte Weiterbildungen der Erfindung sind den weiteren Patentansprüchen entnehmbar.

Es wird vorgeschlagen, dass der Zwischentrieb durch eine Zwischenwelle gebildet ist, die zwei Zahnräder trägt, von denen eines mit der Ausgangswelle des Wechselgetriebes und das andere mit dem am Ausgleichsgehäuse des Achsdifferenziales angeordnetem Antriebsrad (Stirnrad oder Tellerrad) in Eingriff ist.

Der vorgeschlagene Zwischentrieb ist baulich einfacher und kompakter, da er mit nur zwei Zahneingriffen auskommt, während beim Stand der Technik drei Zahneingriffe erforderlich sind. Daraus resultiert auch ein günstigerer Getriebe-Wirkungsgrad bei geringerem herstellungstechnischem Aufwand. Zudem lässt sich der erfindungsgemäße Zwischentrieb besonders günstig in dem benachbartem Bereich zur Antriebsquelle bzw. Brennkraftmaschine anordnen.

Das Differenzialmaß kann deutlich verringert werden, d. h. obwohl die Lösung getriebeseitig (und nicht getriebefern) angeordnet ist, gelingt dort eine motornähere Anordnung der Differenzialwelle im bisherigen, vorderen Getriebegehäuse. Das Differenzialmaß verkörpert den Abstand zwischen Mitte der Differenzialwelle und dem Motor-Getriebe-Flansch.

Die Zwischenwelle kann zumindest im wesentlichen parallel zur Ausgangswelle des Wechselgetriebes angeordnet und mit dieser über einen Stirnradtrieb trieblich verbunden sein. Dabei bleibt das Achsdifferenzial im wesentlichen herkömmlicher Bauart bei Längsanordnung des Antriebsaggregates; d.h. mit einem als Kegeltrieb ausgebildetem Antriebsritzel auf der Zwischenwelle und einem entsprechend verzahntem Tellerrad am Ausgleichsgehäuse des Differenziales.

Besonders vorteilhaft kann die Zwischenwelle jedoch zumindest im wesentlichen quer zur besagten Ausgangswelle des Wechselgetriebes angeordnet und mit der Ausgangswelle über einen Kegeltrieb trieblich verbunden sein. Dementsprechend kann die Verzahnung des Achsdifferenziales eine herstellungstechnisch günstigere Stirnradverzahnung sein, während die erforderliche Kegelverzahnung an der Ausgangswelle des Wechselgetriebes positioniert ist und aufgrund der dann geringeren Abmaße und ggf. einfacherer Verzahnungsparameter (keine Hypoidverzahnung) ebenfalls kostengünstiger zu fertigen ist.

Ferner ist es baulich besonders vorteilhaft, dass die Zwischenwelle und das Differenzial so angeordnet sind, dass die die Räder des Kraftfahrzeuges antreibenden Antriebswellen in der senkrechten Projektion gesehen zwischen der Antriebsquelle und einem Drehmoment-Übertragungsmittel zum Wechselgetriebe positioniert sind. Die eine längere Antriebswelle kann dann unterhalb der Kraftabgabewelle der Antriebsquelle - im Falle einer Brennkraftmaschine der Kurbelwelle - positioniert sein, so dass der erforderliche Freigang trotz niedriger Aggregateanordnung im Kraftfahrzeug gewährleistet ist.

Die Antriebswelle ist unmittelbar hinter dem Drehmoment-Übertragungsmittel angeordnet. Das Drehmoment-Übertragungsmittel ist eine Starter-Generator-Vorrichtung, wobei die besagte Antriebswelle bei den hintereinander geschalteten Übertragungsmitteln zwischen diesen Übertragungsmitteln positioniert ist, zwischen einer Starter-Generator Einrichtung (bekannt auch als ISG) und einer nachgeschalteten, ggf. auch automatisierten Hauptkupplung (Naß- oder Trocken-Reibungskupplung) des Kraftfahrzeuges.

Das Differenzial und/oder die Zwischenwelle kann zudem in baulich vorteilhafter Weise in das Gehäuse des Wechselgetriebes integriert sein. Damit bilden in an sich bekannter Weise das Wechselgetriebe und das Achsdifferenzial mit der Zwischenwelle eine Baueinheit, die mit der Antriebsquelle, insbesondere einer Brennkraftmaschine, zu dem Antriebsaggregat zusammenfügbar ist.

Ferner kann zur Erzielung einer gedrängten, den Freigang der besagten, längeren Antriebswelle sicherstellenden Anordnung die Ausgangswelle des Wechselgetriebes mit ihrer Drehachse horizontal unterhalb der Drehachse der Kraftabgabewelle der Antriebsquelle, insbesondere einer Brennkraftmaschine, positioniert sein und der Kegeltrieb zur Zwischenwelle eine Hypoidverzahnung aufweisen. Damit kann ein höherer vertikaler Versatz der Zwischenwelle zur Ausgangswelle des Wechselgetriebes hergestellt werden.

Gemäß einer weiteren vorteilhaften Ausgestaltung der Erfindung können das Differenzial und die Zwischenwelle in einem Gehäuse angeordnet sein, das als alternatives Modul zu einem Differenzial ohne Zwischenwelle und mit einem kegelverzahntem Tellerrad an das Gehäuse des Wechselgetriebes anflanschbar ist. Damit können bei verschiedenen Baureihen von Antriebsaggregaten bei relativ geringem Mehraufwand unterschiedliche Antriebsquellen verbaut werden (z.B. 4- und 6-Zylinder Brennkraftmaschinen) mit in Längsrichtung zum Kraftfahrzeug bzw. relativ zum Achsdifferenzial unterschiedliche Positionierungen z.B. zur Einstellung gezielter Achslastverteilungen und/oder Aggregatelängen.

Schließlich kann bei einem Kraftfahrzeug mit Allradantrieb das Wechselgetriebe zwei koaxial oder parallel zueinander angeordnete Ausgangswellen mit einem dazwischengeschaltetem Längsausgleich (Zwischenachsdifferenzial) aufweisen und die mit der Zwischenwelle trieblich verbundene Ausgangswelle die Vorderräder des Kraftfahrzeuges über das besagte Achsdifferenzial antreiben.

Mit der Erfindung gelingt es die Vorderachslast infolge Verkürzung des Differenzialmaßes zu reduzieren. Bei der Anordnung der Antriebswelle ermöglicht die Erfindung einen Freiheitsgrad bezüglich einer Variation in der Höhenanordnung, der durch Verschwenkbarkeit im Stirntrieb konstruktiv möglich wird.

Die Lösung ist sehr effektiv, da mit relativ geringem konstruktiven Aufwand eine Verkürzung des Differenzialmaßes gelingt.

Drei Ausführungsbeispiele der Erfindung sind im Folgenden mit weiteren Einzelheiten näher beschrieben.

Die anliegende schematische Zeichnung zeigt in
**Fig. 1** ein Antriebsaggregat für ein frontgetriebenes Kraftfahrzeug mit einer Brennkraftmaschine als Antriebsquelle, einem Geschwindigkeits-Wechselgetriebe und einem Achsdifferenzial, das über eine Zwischenwelle angetrieben ist;
**Fig. 2** ein Antriebsaggregat wie in Fig. 1, jedoch mit einer quer zur Ausgangswelle des Wechselgetriebes angeordneten Zwischenwelle; und
**Fig. 3** ein Antriebsaggregat gemäß Fig. 2 für ein Kraftfahrzeug mit Allradantrieb.

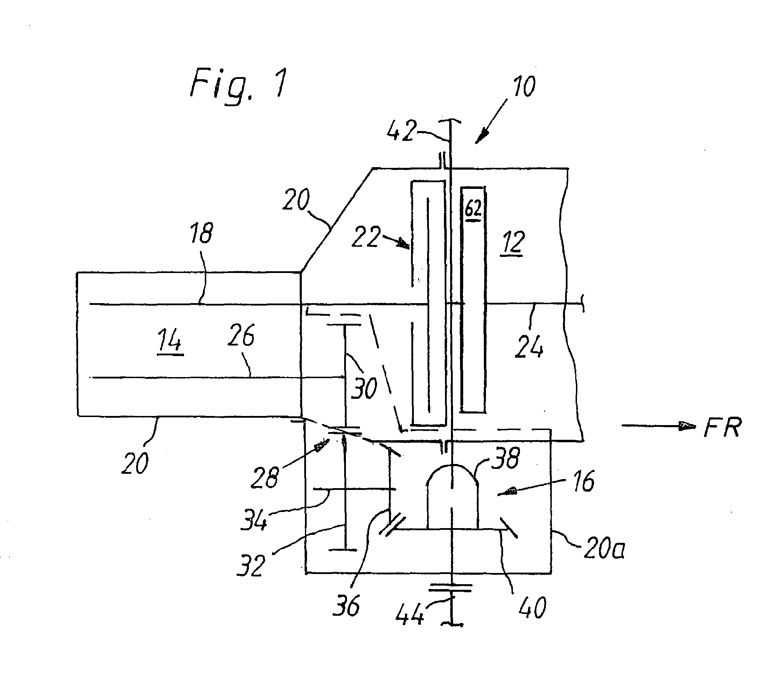

In der **Fig. 1** ist mit 10 ein Antriebsaggregat bezeichnet, das sich im wesentlichen aus einer Brennkraftmaschine 12 als Antriebsquelle, einem Geschwindigkeits-Wechselgetriebe 14 und einem Achsdifferenzial 16 zum Antrieb der nicht dargestellten Vorderräder des Kraftfahrzeuges zusammensetzt. Soweit nicht beschrieben sind die genannten Aggregate herkömmlicher Bauart; so kann das Wechselgetriebe 14 ein Schaltgetriebe oder ein Automatgetriebe und das Differenzial 16 ein Kegelraddifferenzial sein. Das Antriebsaggregat 10 ist beispielsweise frontseitig des Kraftfahrzeuges im Längseinbau angeordnet.

Das Wechselgetriebe 14 weist eine Eingangswelle 18 auf, die in dem nur angedeutetem Getriebegehäuse 20 drehbar gelagert ist und die über eine Hauptkupplung 22 mit der Kraftabgabewelle 24 (Kurbelwelle) der Brennkraftmaschine 12 trieblich verbunden ist.

Ferner ist eine Ausgangswelle 26 des Wechselgetriebes 14 über einen Zwischentrieb bzw. Stirnradtrieb 28 mit den Zahnrädern 30, 32 mit einer parallel zur Ausgangswelle 26 positionierten Zwischenwelle 34 in Eingriff, wobei die Zwischenwelle 34 andererseits ein Antriebsritzel 36 trägt, das wiederum unmittelbar das mit dem Ausgleichsgehäuse 38 fest verbundene Tellerrad 40 des Achsdifferenziales 16 antreibt. Die Verzahnung zwischen dem Antriebsritzel 36 und dem Tellerrad 40 ist in bekannter Weise ein Kegeltrieb mit Hypoidverzahnung.

Die Zwischenwelle 34 und das Differenzial 16 sind in einem Gehäuseabschnitt 20a angeordnet und gelagert, der in nicht dargestellter Weise über eine Flanschausbildung mit dem Gehäuse 20 zu einer Baueinheit verbindbar ist. Die Flanschausbildung kann identisch mit einer Flanschausbildung eines herkömmlichen Achsdifferenziales ohne Zwischenwelle 34 sein, bei dem das Tellerrad 40 in bekannter Weise unmittelbar mit dem auf der Ausgangswelle 26 des Wechselgetriebes 14 dann vorgesehenem Antriebsritzel 36 in Eingriff ist.

Geht man davon aus, dass bei einem definiertem Kraftfahrzeug die Position der von dem Achsdifferenzial 16 abgehenden Antriebswellen 42, 44 zum Antrieb der Vorderräder durch die Bauart und die gewünschte Achslastverteilung vorgegeben ist, so kann durch die Anordnung der beschriebenen Zwischenwelle 34 das Wechselgetriebe 14 mit der Brennkraftmaschine 12 relativ zu Lage der Antriebswellen 42, 44 in Fahrzeuglängsrichtung nach hinten (d. h. entgegen der Fahrtrichtung FR) verschoben und damit verbunden die Achslastverteilung verändert und/oder der Überhang des Aggregates 10 verkürzt und/oder der erforderliche Freiraum für den Einbau des Aggregates 10 in den vorhandenen Vorbau geschaffen werden.

Durch entsprechende Gestaltung der Zwischenwelle 34 und der Übersetzungen am Stirnradtrieb 28 und dem Kegeltrieb 36, 40 kann das Achsdifferenzial 16 so positioniert werden, dass die quer verlaufenden Antriebswellen 42, 44 in Draufsicht gesehen zwischen der Brennkraftmaschine 12 und der an deren Kraftabgabewelle bzw. Kurbelwelle 24 und der daran angeflanschten Hauptkupplung 22 als Drehmoment-Übertragungsmittel verlaufen und somit in vertikaler Richtung betrachtet relativ nahe zur Drehmittelachse der Kraftabgabewelle 24 positionierbar sind (dies betrifft insbesondere die längere, die Kraftabgabewelle 24 kreuzende Antriebswelle 42). Dadurch kann das Antriebsaggregat 10 zur Erzielung eines flachen, aerodynamisch günstigen Vorbaus des Kraftfahrzeuges relativ tief angeordnet werden.

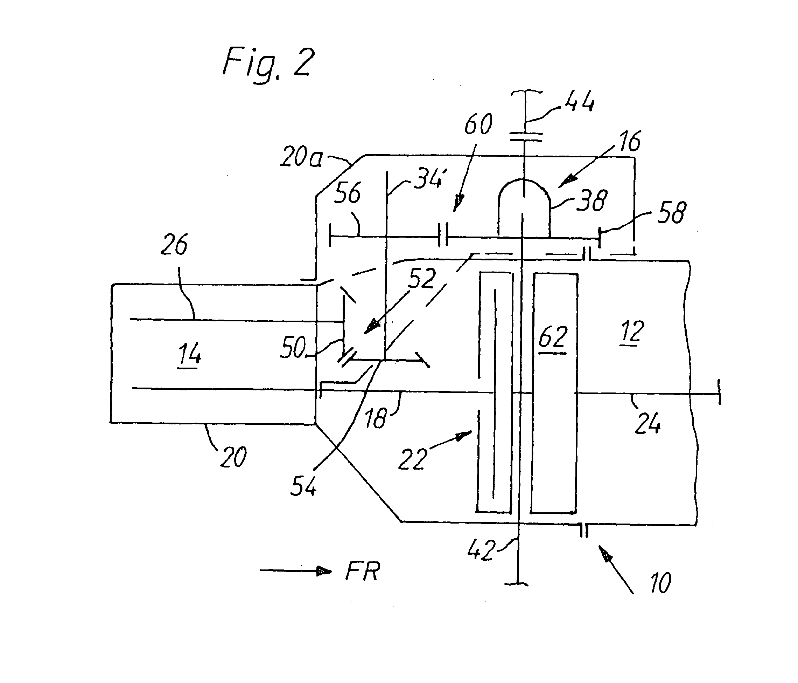

In der **Fig. 2** sind funktionell gleiche Teile mit den gleichen Bezugszeichen wie in der Fig. 1 versehen. Die Ausführung gemäß Fig. 2 ist nur insoweit beschrieben, als sie wesentlich von der Fig. 1 abweicht.

Dabei ist an der Ausgangswelle 26 des Wechselgetriebes 14 ein Kegelzahnrad 50 befestigt, welches Teil eines Zwischentriebes bzw. Kegeltriebes 52 mit einem weiteren Kegelzahnrad 54 ist. Das Kegelzahnrad 54 sitzt auf der Zwischenwelle 34', die in der Draufsicht gesehen quer zur Fahrzeuglängsrichtung und senkrecht zur Ausgangswelle 26 verläuft. Die Verzahnung des Kegeltriebes 52 kann als Hypoidverzahnung ausgeführt sein, bei der die Drehachse der Ausgangswelle 26 tiefer liegt als die Drehachse der Zwischenwelle 34'.

Die Zwischenwelle 34' wiederum trägt ein Stirnzahnrad 56, das als Teil des Stirnradtriebes 60 mit dem Stirnradzahnrad 58 auf dem Ausgleichsgehäuse 38 des Achsdifferenziales 16 kämmt.

Die Anordnung des Zwischentriebes 52, 34'und 60 ist hinsichtlich der gewählten Übersetzungen, der Zahnraddurchmesser und der Achsabstände so, dass die Antriebswellen 42, 44 in der Draufsicht gesehen zwischen einer Starter-Generator Einrichtung 62 (ISG) und der Hauptkupplung 22 verlaufen.

Bei einem automatischen Wechselgetriebe kann anstelle der Hauptkupplung 22 als Drehmoment-Übertragungsmittel auch ein hydraulischer Drehmomentwandler, eine Pulver-Magnetkupplung etc. vorgesehen sein.

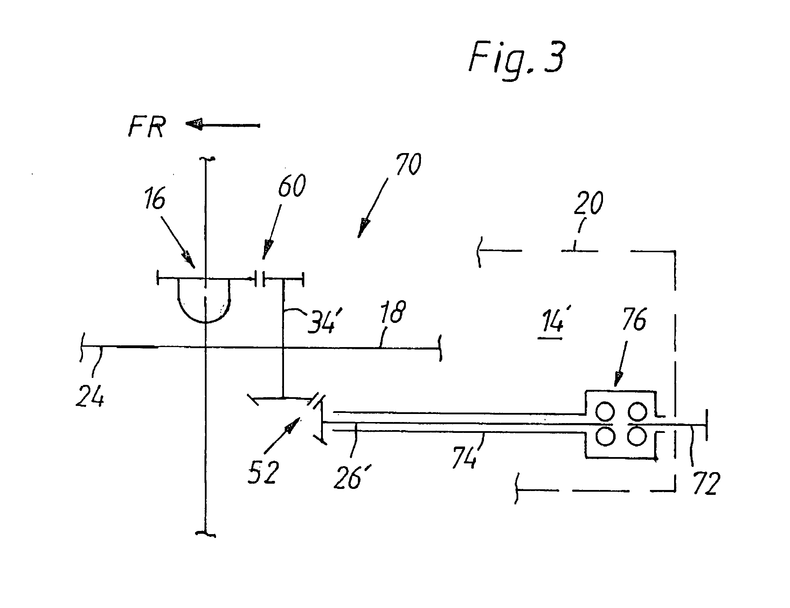

In der **Fig. 3** schließlich ist ein Antriebsaggregat 70 für einen Allradantrieb eines Kraftfahrzeuges dargestellt, das ebenfalls nur insoweit beschrieben ist, als es wesentlich von den beiden vorhergehenden Ausführungsbeispielen abweicht. Gleiche Teile sind mit gleichen Bezugszeichen versehen.

Das Wechselgetriebe 14' weist dabei zwei Ausgangswellen 26' und 72 auf, die von einer Hohlwelle 74 und über ein Zwischenachsdifferenzial 76 z.B. der Torsenbauart angetrieben sind.

Die Ausgangswelle 72 treibt in bekannter Weise über eine nicht dargestellte Kardanwelle ein Hinterachsdifferenzial des Kraftfahrzeuges an, während die nach vorne endende Ausgangswelle 26'über den Zwischentrieb 52, 34', 60 (vgl. auch Fig. 2) das vordere Achsdifferenzial 16 antreibt.

Die Hauptkupplung 22 liegt in diesem Ausführungsbeispiel wie in den vorstehenden Ausführungsbeispielen gemäß Fig. 1 und 2 beschrieben ist.

Wie die Ausführungsbeispiele nach Fig. 2 und 3 zeigen, kann die jeweils dort gezeigte erfindungsgemäße Anordnung (16, 60) links oder rechts des Übertragungsmittels 22 angeordnet werden. Hierzu gibt es keine Einschränkungen.

Abweichend von den Figuren 1 bis 3 kann die Zwischenwelle 34, 34' auch schräg zur Ausgangswelle 26 positioniert sein.

## Patentansprüche

1. Antriebsaggregat, insbesondere für Kraftfahrzeuge, mit einer Antriebsquelle (12), einem nachgeschaltetem Geschwindigkeits-Wechselgetriebe (14) und einem Achsdifferenzial(16), wobei das Achsdifferenzial(16) über einen der Antriebsquelle (12) benachbarten Zwischentrieb seitlich versetzt zur Ausgangswelle (26) des Wechselgetriebes (14) angeordnet ist, und wobei der Zwischentrieb durch eine Zwischenwelle (34; 34') gebildet ist, die zwei Zahnräder (32, 36; 54, 56) trägt, von denen eines mit der Ausgangswelle (26) des Wechselgetriebes (14) und das andere mit dem am Ausgleichsgehäuse (38) des Differenziales (16) angeordnetem Antriebsrad (40; 58) in Eingriff ist und wobei eine Hauptkupplung (22) zwischen Antriebsquelle (12) und Geschwindigkeits-Wechselgetriebe (14) vorgesehen ist und das Differenzial (16) Antriebswellen (42, 44) zum Antrieb von Rädern des Kraftfahrzeugs hat, **dadurch gekennzeichnet, dass** zwischen der Hauptkupplung (22) und der Antriebsquelle (12) eine Starter-Generator-Vorrichtung (62) vorgesehen ist, die mit der Antriebsquelle (12) verbunden ist und, dass die Antriebswellen (42, 44) des Differenziales (16) zwischen der Starter-Generator-Vorrichtung (62) und der nachgeschalteten Hauptkupplung (22) positioniert sind.

2. Antriebsaggregat nach Anspruch 1, **dadurch gekennzeichnet, dass** die Zwischenwelle (34') quer zur besagten Ausgangswelle (26) des Wechselgetriebes (14) angeordnet und mit dieser über einen Kegeltrieb (52) trieblich verbunden ist.

3. Antriebsaggregat nach den Ansprüchen 1 und 2, **dadurch gekennzeichnet, dass** die Zwischenwelle (34') abtriebsseitig über einen Stirnradtrieb (60) mit dem Ausgleichsgehäuse (38) des Differenziales (16) zusammenwirkt.

4. Antriebsaggregat nach Anspruch 1, **dadurch gekennzeichnet, dass** die Zwischenwelle (34) parallel zur Ausgangswelle (26) des Wechselgetriebes (14) angeordnet und mit dieser über einen Stirnradtrieb (28) trieblich verbunden ist.

5. Antriebsaggregat nach einem der vorhergehenden Ansprüche, **dadurch gekennzeichnet, dass** das Differenzial (16) und/oder die Zwischenwelle (34) in das Gehäuse (20) des Wechselgetriebes (14) integriert sind.

6. Antriebsaggregat nach einem der vorhergehenden Ansprüche, **dadurch gekennzeichnet, dass** das Differenzial (16) und die Zwischenwelle (34) in einem Gehäuse (20a) angeordnet sind, das als alternatives Modul zu einem Getriebe ohne Zwischenwelle an das Gehäuse (20) des Wechselgetriebes (14) anflanschbar ist.

7. Antriebsaggregat nach einem der vorhergehenden Ansprüche, **dadurch gekennzeichnet, dass** das Wechselgetriebe zwei koaxial oder parallel zueinander angeordnete Ausgangswellen mit einem dazwischengeschaltetem Längsausgleich aufweist und dass die mit der Zwischenwelle trieblich verbundene Ausgangswelle eine von zwei angetriebenen Achsen antreibt.

8. Antriebsaggregat nach einem der vorhergehenden Ansprüche, **dadurch gekennzeichnet, dass** das Vorderachsdifferenzial mit den Antriebswellen (42, 44) durch Verschwenken im Stirnbereich in ihrer Höhe konstruktiv variierbar ist.

## Claims

1. A power train, in particular for motor vehicles, having a power source (12), a change-speed gear (14) connected downstream thereof and an axle differential (16), the axle differential (16) being located, via an intermediate drive adjoining the power source (12), in such a way as to be laterally offset relative to the output shaft (26) of the change-speed gear (14), and the intermediate drive being formed by an intermediate shaft (34; 34') which bears two gearwheels (32, 36; 54, 56), of which one engages with the output shaft (26) of the change-speed gear (14) and the other engages with the driving wheel (40; 58) mounted on the case (38) of the differential (16), and a main clutch (22) being provided between power source (12) and change-speed gear (14), and the differential (16) having drive shafts (42, 44) for driving the wheels of the motor vehicle, **characterized in that** a starter-generator device (62), connected to the power source (12), is provided between the main clutch (22) and the power source (12) and **in that** the drive shafts (42, 44) of the differential (16) are positioned between the starter-generator device (62) and the main clutch (22) connected downstream thereof.

2. A power train according to Claim 1, **characterized in that** the intermediate shaft (34') is disposed perpendicular to said output shaft (26) of the change-speed gear (14) and is operatively coupled to the latter via a bevel gear (52).

3. A power train according to Claims 1 and 2, **characterized in that** on the power take-off side the intermediate shaft (34') cooperates via a spur-wheel gear (60) with the case (38) of the differential (16).

4. A power train according to Claim 1, **characterized in that** the intermediate shaft (34) is disposed parallel to the output shaft (26) of the change-speed gear (14) and is operatively coupled thereto via a spur-wheel gear (28).

5. A power train according to one of the preceding claims, **characterized in that** the differential (16) and/or the intermediate shaft (34) are integrated into the housing (20) of the change-speed gear (14).

6. A power train according to one of the preceding claims, **characterized in that** the differential (16) and intermediate shaft (34) are disposed in a housing (20a), which can be flange-mounted on the housing (20) of the change-speed gear (14) as an alternative module to a gear without intermediate shaft.

7. A power train according to one of the preceding claims, **characterized in that** the change-speed gear has two output shafts disposed coaxially or parallel to one another with a longitudinal differential interposed between them, and **in that** the output shaft operatively coupled to the intermediate shaft drives one of two driven axles.

8. A power train according to one of the preceding claims, **characterized in that** the front axle differential with the drive shafts (42, 44) can be structurally varied in height by a swivelling action in the front region.

## Revendications

1. Groupe d'entraînement, en particulier pour véhicules automobiles, comprenant une source d'entraînement (12), une boîte de vitesses (14) montée en aval et un différentiel d'essieu (16), le différentiel d'essieu (16) étant disposé au-dessus d'un pignon intermédiaire adjacent à la source d'entraînement (12) en étant décalé latéralement de l'arbre de sortie (26) de la boîte de vitesses (14), et le pignon intermédiaire étant formé par un arbre intermédiaire (34 ; 34'), qui supporte deux roues dentées (32, 36 ; 54, 56), parmi lesquelles l'une est en prise avec l'arbre de sortie (26) de la boîte de vitesses (14) et l'autre avec la roue d'entraînement (40 ; 58) disposée sur la chambre de compensation (38) du différentiel (16), un embrayage principal (22) étant prévu entre la source d'entraînement (12) et la boîte de vitesses (14) et le différentiel (16) présentant des arbres d'entraînement (42 ; 44) destinés à entraîner les roues du véhicule automobile, **caractérisé en ce qu'**un dispositif de générateur/démarreur (62) est prévu entre l'embrayage principal (22) et la source d'entraînement (12), lequel dispositif est relié à la source d'entraînement (12), et **en ce que** les arbres d'entraînement (42, 44) du différentiel (16) sont positionnés entre le dispositif de générateur/démarreur (62) et l'embrayage principal (22) monté en aval.

2. Groupe d'entraînement selon la revendication 1, **caractérisé en ce que** l'arbre intermédiaire (34') est disposé transversalement audit arbre de sortie (26) de la boîte de vitesses (14) et y est relié par entraînement par l'intermédiaire d'un engrenage conique (52).

3. Groupe d'entraînement selon l'une des revendications 1 et 2, **caractérisé en ce que** l'arbre intermédiaire (34') coopère côté conducteur par l'intermédiaire d'un engrenage à pignon droit (60) avec la chambre de compensation (38) du différentiel (16).

4. Groupe d'entraînement selon la revendication 1, **caractérisé en ce que** l'arbre intermédiaire (34) est disposé parallèlement à l'arbre de sortie (26) de la boîte de vitesses (14) et y est relié par entraînement par l'intermédiaire d'un engrenage à pignon droit.

5. Groupe d'entraînement selon l'une quelconque des revendications précédentes, **caractérisé en ce que** le différentiel (16) et/ou l'arbre intermédiaire (34) sont intégrés dans le boîtier (20) de la boîte de vitesses (14).

6. Groupe d'entraînement selon l'une quelconque des revendications précédentes, **caractérisé en ce que** le différentiel (16) et l'arbre intermédiaire (34) sont disposés dans un boîtier (20a), qui peut être bridé en tant que module alternatif pour former une transmission sans arbre intermédiaire au boîtier (20) de la boîte de vitesses (14).

7. Groupe d'entraînement selon l'une quelconque des revendications précédentes, **caractérisé en ce que** la boîte de vitesses comprend deux arbres de sortie disposés de manière coaxiale ou parallèle l'un à l'autre comprenant une compensation longitudinale montée entre ceux-ci et **en ce que** l'arbre de sortie relié par entraînement à l'arbre intermédiaire propulse l'un parmi deux essieux propulsés.

8. Groupe d'entraînement selon l'une quelconque des revendications précédentes, **caractérisé en ce que** la hauteur de construction du différentiel d'essieu avant comprenant les arbres d'entraînement (42, 44) peut être modifiée par un pivotement dans la zone frontale.
